# EUROPEAN PATENT SPECIFICATION

(11) **EP 3 871 481 B1**
(45) Date of publication and mention of the grant of the patent: **24.04.2024**
(21) Application number: 21159821.4
(22) Date of filing: 01.03.2021
(51) Int. Cl.: A01B 69/00, A01B 63/00, A01D 41/127, A01B 69/04, A01B 79/00

(54) **AGRICULTURAL VEHICLE PROVIDED WITH A FRONT AND A REAR 3 D IMAGING DEVICE**
LANDWIRTSCHAFTLICHES FAHRZEUG MIT EINER VORDEREN UND EINER HINTEREN 3D-BILDGEBUNGSVORRICHTUNG
VÉHICULE AGRICOLE ÉQUIPÉ D'UN DISPOSITIF D'IMAGERIE 3D AVANT ET ARRIÈRE

(30) Priority: 28.02.2020 IT 202000004222
(43) Date of publication of application: 01.09.2021
(73) Proprietor: CNH Industrial Italia S.p.A., 10156 Torino (IT)
(72) Inventor: FERRARI, Luca, 41126 Modena (IT); DI CECILIA, Luca, 41123 Modena (IT)
(74) Representative: CNH Industrial IP Department

(56) References cited:
- CN-A- 105 043 247
- DE-A1-102016 212 623
- DE-A1-102018 200 411
- US-A1- 2019 387 658

## Description

### TECHNICAL FIELD

The present invention relates to an agricultural vehicle provided with a front and a rear 3D imaging device.

### BACKGROUND OF THE INVENTION

The global food demand is rapidly growing as a result of the increasing world population.

More specifically, in the agricultural field, there is an increasing need of agricultural vehicles configured to operate autonomously with high production rate and improved efficiency. Thus, autonomous guidance is becoming one of the most important fields of innovation for agricultural vehicles, and companies are strongly investing in this field.

Autonomous guidance systems are normally based on the use of digital signal processing to elaborate information provided by sensors configured to detect the surroundings of the agricultural vehicle for taking autonomous decisions on how to control the agricultural vehicle.

CN105043247A discloses a control system for operation of one or more agricultural operations and a method for such operation is disclosed. The control system and method enables execution of a first operation on a field with an implement resulting in residue on the field. A first image is captured with a camera assembly of an area of the field that is ahead of or behind the implement. The first image is analyzed to determine an indicator of residue coverage on the field. A subsequent operation on the field is not performed by another vehicle.

DE102016212623A1 discloses a UAV-based sensing for worksite operations, wherein a sensor senses an attribute of a worksite at a location that is geographically spaced from a corresponding mobile machine. An operation is performed at the location, based upon the sensed attribute. An action signal is generated based on the effect data. An unmanned aerial vehicle communicates effect data, indicative of an effect of the operation at the location, to the mobile machine. The action signal can be used to control worksite operations.

US2019387658A1 discloses systems and methods for realtime, artificial intelligence control of an agricultural work vehicle and/or implement based on observed outcomes are provided. In particular, example aspects of the present subject matter are directed to systems and method that sense field conditions (also known as field "finish") both before and after adjustable ground-engaging tools encounter the soil and that update a site-specific control model that provides control settings based on the observed anterior and posterior conditions. Thus, a control system can obtain sensor data descriptive of upcoming field conditions and can perform predictive adjustment and control of tools based the upcoming field conditions. The system can then use additional sensors to observe the outcome of the employed control settings. Based on a comparison of the observed outcome to a target outcome, the system can adjust for the next encounter of similar field conditions.

DE102018200411A1 discloses a method for tilling, preferably agriculturally exploitable, soil (16), comprising soil tilling means, by means of which the ground and/or plantation in the ground is tilled, wherein the state of the ground and/or plantation in the ground is recorded by recording means, and the state of the ground and/or plantation in the ground is analysed by evaluation and/or control means.

The scope of the present invention is to enable one or more agricultural vehicles to perform autonomous operations by exploiting a dual three dimensional (3D) imaging device system and a shared field mapping system.

### SUMMARY OF THE INVENTION

The previously described aim is obtained by the present invention that relates to an agricultural vehicle provided with a front and a rear 3D imaging device.

### BRIEF DESCRIPTION OF DRAWINGS

For a better understanding of the present invention, a preferred embodiment is described in the following, by way of a non-limiting example, with reference to the attached drawings wherein:
Figure 1 shows schematically an agricultural vehicle provided with a front and a rear 3D imaging device realized according to the present invention;
Figures 2 - 5 shown different embodiment of the invention.

### DETAILED DESCRIPTION OF THE INVENTION

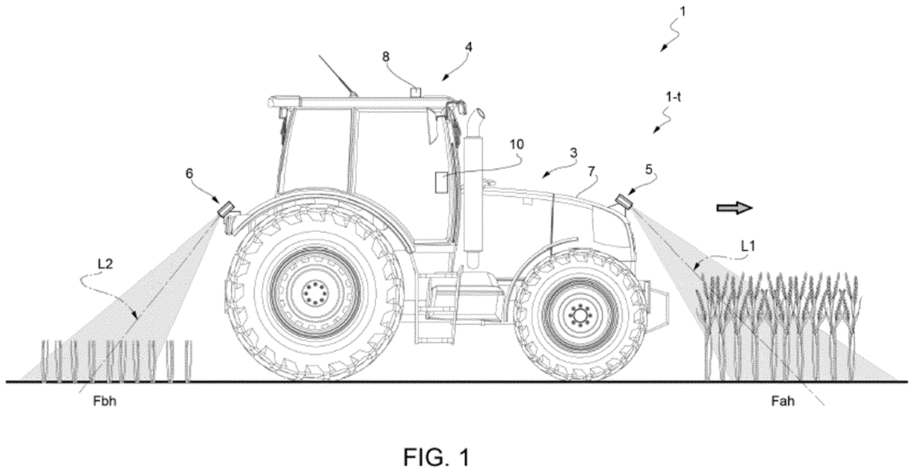

Numeral 1 indicates, as a whole, an agriculture vehicle 1 wherein a vehicle body 3 is provided with a cab 4 for the operator. In figure 1 it is shown a tractor 1-t whose mechanical structure is of a known kind.

The present invention is defined by independent claim 1, among other defining that the vehicle 1 is provided with a front three dimensional imaging device 5 (LIDAR sensor in the preferred example) configured to scan a **field ahead (Fah)** that is the ground area in front of the vehicle 1 towards which the vehicle is moving (see the arrow showing the direction of the vehicle 1) and a rear three dimensional imaging device 6 (LIDAR sensor in the preferred example) configured to scan a **field behind (Fbh)** that is a rear area on which the vehicle has previously moved.

Particular embodiments of the invention are defined in the dependent claims.

In the example, the front LIDAR sensor 5 is carried by a front portion of the vehicle (the hood 7 in the example) and the rear LIDAR 6 is carried by a rear portion of the vehicle: both sensors 5,6 have optical axes L1, L2 inclined with respect to the horizontal direction. As it is known a LIDAR system **fires** rapid pulses of laser light at a surface, and then it measures the amount of time it takes for each pulse to bounce back after being reflected by objects in the surroundings. Differences in laser return times and intensities can then be used to make digital 3-D representations of the environment by means of point clouds.

Imaging devices 5 and 6 may be of different kind such as 3D Stereo-Camera, a 3D RADAR, or a 3D Ultrasound sensor, etc.

Vehicle 1 is provided with a GPS system 8 (of known kind) configured to provide position and coordinates of the scanned field ahead **Fah** and of the scanned field behind **Fbh.** Each point cloud or group of points acquired by one of the two LIDARs 5, 6 are GPS-tagged.

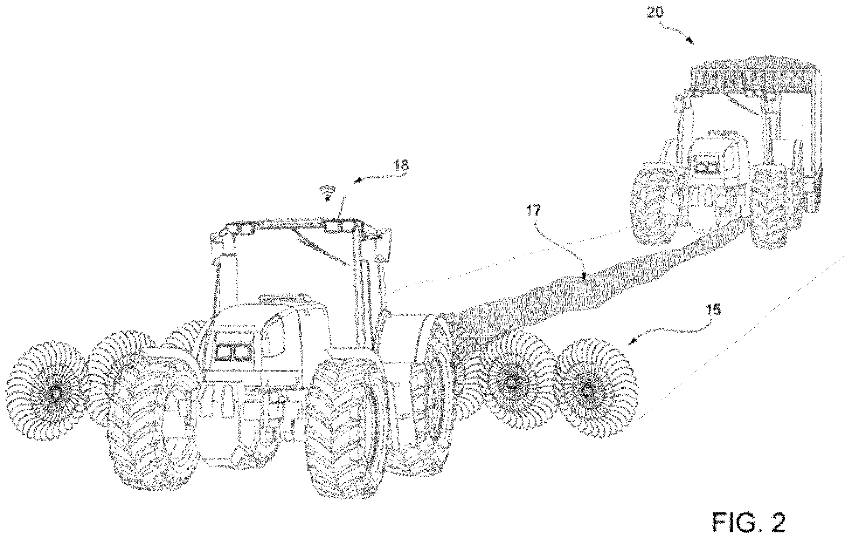

The vehicle 1 is also provided with an electronic unit 10, on which runs a software capable of comparing **point clouds** of the field ahead **Fah** and of field behind **Fbh** to provide autonomous guidance to the agricultural vehicle 1 and/or to automate the agricultural operations performed by the agricultural vehicle 1. Preferably, the software implements Artificial Intelligence algorithms. Each GEO-tagged point cloud that is collected by the LIDARs is made available to other vehicles operating in the same area, for instance by means of wireless technology of known kind 18 (see, for instance, the example of figure 2), to enable automatic subsequent operations of agricultural machines (examples are described below).

In the example **of** **figure 2****,** the agricultural vehicle 1 is a tractor provided with a hay rake (or a windrower) 15 (of known kind) designed to collect cut hay or forage into at least a windrow 17 for later harvesting; as it is known a windrow 17 is a row of cut or mown hay or small grain crop.

The rear LIDAR 6 scans the field behind **Fbh** and collects GEO-tagged point clouds that represent a map comprising the windrow 17. The electronic unit 10 is designed to detect the presence and the position of the windrow 17 in map of the field behind **Fbh** for estimating the shape and the volume of the windrow 17.

Most preferably, the electronic unit 10 is also designed to share the position/map of the windrow 17 (for instance by means of wireless techniques 18 of known kind) to another baler/harvester vehicle 20, which is following the agricultural vehicle 1-t and is designed for collecting the windrow 17. Such vehicle 20 exploits the map that was previously updated by former vehicle, together with its front LIDAR to scan the field ahead **Fah,** in order to harvest the crop. The rear LIDAR of vehicle 20 then scans the field behind **Fbh** and again the electronic unit 10 updates the map of the field behind **Fbh** where the windrow is no longer present.

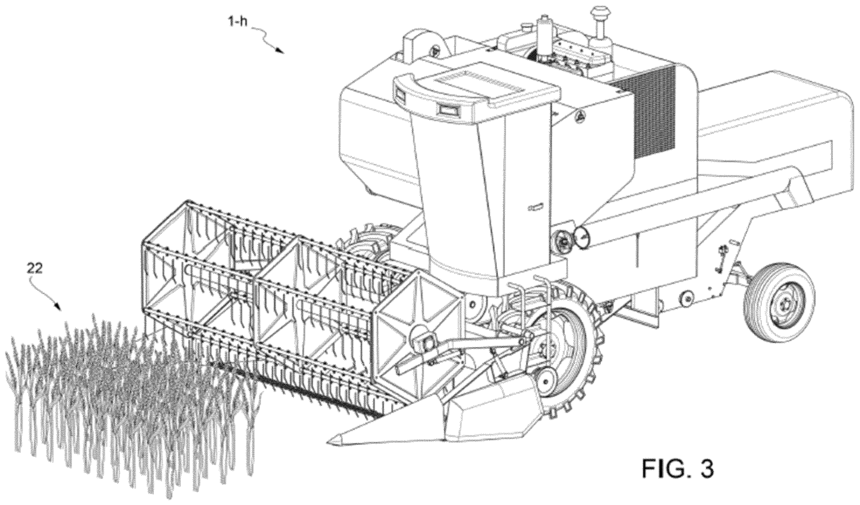

In the example of **figure 3****,** the agricultural vehicle is **a harvester** 1-h designed to cut and collect crop 22. The electronic unit 10 is designed to detect the position and shape of the field crop 22 based on the point cloud of the field ahead **Fah** to be harvested and is designed to guide the agricultural vehicle accordingly. In addition, the electronic unit compares such point cloud with the field behind **Fbh,** acquired with the rear LiDAR 6 after the operation was performed: this allows to estimate the amount of harvested crop and/or the harvesting quality.

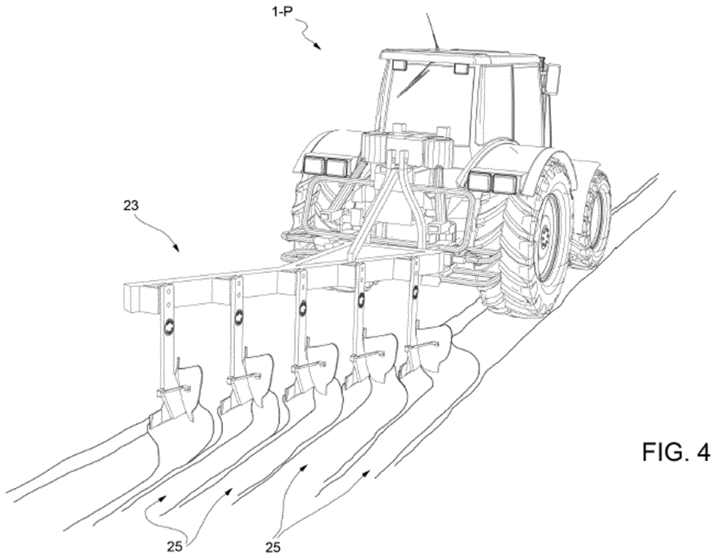

In the example **of** **figure 4****,** the agricultural vehicle 1-p is a tractor provided with a plough **23.** The field ahead **Fah** scanned by the front LIDAR 5 device is exploited for guiding the tractor in the field in order to perform autonomous ploughing. The point cloud of the field behind **Fbh,** collected by the rear LIDAR 6, is processed by the electronic unit 10 and is exploited to map the position of the furrows 25 that the plough 23 has cut in the soil. In addition, the electronic unit can measure the depth and shape of the furrows 25 that the plough has cut in the soil, by analyzing the acquired point cloud, and the tractor can control the plough implement accordingly with respect to a user-defined target.

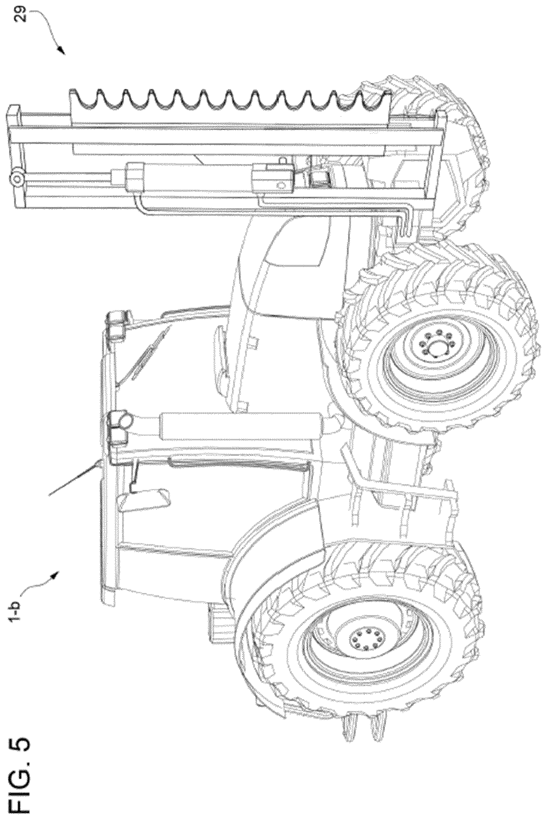

In the example **of** **figure 5****,** the agricultural vehicle is a tractor 1-b provided with a pruner 29 designed to cut branches of trees in a vineyard or orchard. The map of the field ahead **Fah** scanned by the front LIDAR 5 is exploited for guiding the vehicle through the vineyard or orchard. In addition, the electronic unit 10 is designed to detect the shape of the trees to be pruned based on the **point cloud** of the field ahead **Fah.** Moreover, it is designed to compare such point cloud with that of the field behind **Fbh,** acquired by the rear LIDAR 6, to evaluate the volume of the pruned branches and to evaluate the quality of the pruning operations.

## Claims

1. Agricultural vehicle (1) wherein a vehicle body (3) is provided with a cab (4) for the operator:
the vehicle (1) is provided with a front three dimensional imaging device (5) configured to scan the field ahead (Fah) that is the area in front of the vehicle (1) towards which the vehicle is moving and a rear three dimensional imaging device (6) configured to scan the field behind (Fbh), that is a rear area on which the vehicle has previously moved;
the vehicle (1) is provided with a GPS system (8) configured to provide position and coordinates of the scanned point clouds of the field ahead (Fah) and of the field behind(Fbh);
the vehicle is also provided with an electronic unit (10) configured to compare point clouds of the field ahead (Fah) and of field behind (Fbh), provided by the front and rear three-dimensional imaging devices (5, 6) and the GPS system (8), to provide autonomous guidance to the agricultural vehicle and/or to automate the agricultural operations performed by the agricultural vehicle,
**characterized in that**
said electronic unit (10) is designed to transmit the position and coordinates of the scanned point clouds of the field ahead (Fah) and of the field behind (Fbh) to at least another vehicle (20) operating in the same area so as to enable automatic subsequent operations thereof.

2. Agricultural vehicle as defined in claim 1, wherein said agricultural vehicle is a tractor (1-t) provided with a hay rake (15) designed to collect cut hay or forage into at least a windrow (17) for later harvesting;
the rear imaging device (6) configured to scan the field behind (Fbh) and to collect GEO-tagged point clouds that represent a map comprising the windrow (17);
said electronic unit (10) is designed to detect the shape and position of the windrow (17) in the map for estimating the volume of the windrow (17), based at least on the point cloud of the field behind (Fbh).

3. System comprising a first agricultural vehicle as defined in claim 2, wherein said electronic unit (10) is designed to transmit the map to another baler/harvester vehicle (20) following in the field said agricultural vehicle (1) and designed for harvesting the windrow (17);
said system further comprising another vehicle (20) that is designed to exploit the map that was previously updated by said first vehicle, together with its front imaging device (5) to scan the field ahead (Fah), in order to harvest the crop.

4. Agricultural vehicle as defined in claim 1, wherein said agricultural vehicle is a harvester (1-h) designed to cut and collect crop (22);
said electronic unit (10) is designed to detect the position and shape of the field crop (22) based on the point cloud of the field ahead (Fah) to be harvested and is designed to guide the agricultural vehicle accordingly.

5. Agricultural vehicle as defined in claim 4, wherein said electronic unit is designed to compare the point cloud of the field ahead (Fah) with the point cloud of the field behind (Fbh), acquired with the rear imaging device (6) after the operation was performed in order to estimate the harvested and/or the harvesting quality.

6. Agricultural vehicle as defined in claim 1, wherein said agricultural vehicle is a tractor (1-p) provided with a plough (23);
the field ahead (Fah) scanned by the front imaging device (5) is exploited for guiding the tractor in the field in order to perform autonomous ploughing; the point cloud of the field behind (Fbh), collected by the rear LIDAR (6) , is processed by the electronic unit (10) and is exploited to map the position of the furrows (25) that the plough (23) has cut in the soil.

7. Agricultural vehicle as defined in claim 6, wherein the electronic unit (10) is designed to measure the depth and shape of the furrows (25) that the plough has cut in the soil, by analyzing the acquired point cloud, and the tractor is designed to control the plough implement accordingly with respect to a user-defined target.

8. Agricultural vehicle as defined in claim 1, wherein said agricultural vehicle is a tractor provided with a pruner (29) designed to cut branches of trees in a vineyard or orchard;
the electronic unit (10) is designed to use the map of the field ahead (Fah) scanned by the front imaging device (5) for guiding the vehicle through the vineyard or orchard.

9. Agricultural vehicle as defined in claim 8, wherein the electronic unit (10) is designed to detect the shape of the trees to be pruned based on the point cloud of the field ahead (Fah) and it is designed to compare such point cloud with that of the field behind (Fbh), acquired by the rear imaging device (6)
to evaluate the volume of the pruned branches and to evaluate the quality of the pruning operations.

10. Agricultural vehicle as one of the preceding claim wherein the front/rear imaging device is one of the following:
a LIDAR sensor;
3D Stereo-Camera,
a 3D RADAR, or
a 3D Ultrasound sensor.

## Patentansprüche

1. Landwirtschaftliches Fahrzeug (1), wobei ein Fahrzeugaufbau (3) mit einer Kabine (4) für die Bedienperson vorgesehen ist:
wobei das Fahrzeug (1) mit einer vorderen dreidimensionalen bildgebenden Vorrichtung (5), die dazu eingerichtet ist, das vorausliegende Feld (Fah) zu scannen, das heißt den Bereich, der sich in der Richtung, in der sich das Fahrzeug bewegt, vor dem Fahrzeug (1) befindet, und mit einer hinteren dreidimensionalen bildgebenden Vorrichtung (6) ausgestattet ist, die dazu eingerichtet ist, das zurückliegende Feld (Fbh) zu scannen, das heißt einen hinteren Bereich, über den sich das Fahrzeug zuvor bewegt hat;
wobei das Fahrzeug (1) mit einem GPS-System (8) ausgestattet ist, das dazu eingerichtet ist, eine Position und Koordinaten der gescannten Punktwolken des vorausliegenden Felds (Fah) und des zurückliegenden Felds (Fbh) bereitzustellen;
wobei das Fahrzeug des Weiteren mit einer elektronischen Einheit (10) ausgestattet ist, die dazu eingerichtet ist, die Punktwolken des vorausliegenden Felds (Fah) und des zurückliegenden Felds (Fbh) zu vergleichen, die von der vorderen und der hinteren dreidimensionalen bildgebenden Vorrichtung (5, 6) und dem GPS-System (8) bereitgestellt werden, um eine automatische Führung des landwirtschaftlichen Fahrzeugs bereitzustellen und/oder zum Automatisieren der landwirtschaftlichen Arbeitsvorgänge, die von dem landwirtschaftlichen Fahrzeug ausgeführt werden,
**dadurch gekennzeichnet, dass**
die elektronische Einheit (10) dazu ausgebildet ist, die Position und die Koordinaten der erfassten Punktwolken des vorausliegenden Felds (Fah) und des zurückliegenden Felds (Fbh) an mindestens ein weiteres Fahrzeug (20) zu senden, das in dem gleichen Bereich betrieben wird, um automatische nachfolgende Arbeitsvorgänge desselben zu ermöglichen.

2. Landwirtschaftliches Fahrzeug nach Anspruch 1, wobei das landwirtschaftliche Fahrzeug ein Traktor (1-t) ist, der mit einem Heuschwader (15) ausgestattet ist, der dazu ausgebildet ist, geschnittenes Heu oder Grünfutter in mindestens einem Schwad (17) zum späteren Ernten zusammenzuziehen;
wobei die hintere bildgebende Vorrichtung (6) dazu eingerichtet ist, das zurückliegende Feld (Fbh) zu scannen und GEO-markierte Punktwolken aufzunehmen, die eine Karte darstellen, die den Schwad (17) umfasst;
wobei die elektronische Einheit (10) dazu ausgebildet ist, die Form und die Position des Schwads (17) in der Karte zum Bestimmen des Volumens des Schwads (17) basierend auf mindestens der Punktwolke des zurückliegenden Felds (Fbh) zu erfassen.

3. System mit einem ersten landwirtschaftlichen Fahrzeug nach Anspruch 2, wobei die elektronische Einheit (10) dazu ausgebildet ist, die Karte an eine andere Ballenpresse/Erntefahrzeug (20) zu senden, das dem landwirtschaftlichen Fahrzeug (1) in dem Feld folgt und das dazu ausgebildet ist, den Schwad (17) zu ernten;
wobei das System des Weiteren ein weiteres Fahrzeug (20) umfasst, das dazu ausgebildet ist, die Karte, die zuvor von dem ersten Fahrzeug geupdatet wurde, zusammen mit dessen vorderer bildgebenden Vorrichtungen (5) auszuwerten, um das vorausliegende Feld (Fah) zum Ernten des Ernteguts zu scannen.

4. Landwirtschaftliches Fahrzeug nach Anspruch 1, wobei das landwirtschaftliche Fahrzeug eine Erntemaschine (1-h) ist, die dazu ausgebildet ist, das Erntegut (22) zu schneiden und aufzunehmen;
wobei die elektronische Einheit (10) dazu ausgebildet ist, die Position und die Form des Feld-Ernteguts (22) basierend auf der Punktwolke des abzuerntenden vorausliegenden Felds (Fah) zu erfassen, und die dazu ausgebildet ist, das landwirtschaftliche Fahrzeug entsprechend zu führen.

5. Landwirtschaftliches Fahrzeug nach Anspruch 4, wobei die elektronische Einheit dazu ausgebildet ist, die Punktwolke des vorausliegenden Felds (Fah) mit der Punktwolke des zurückliegenden Felds (Fbh) zu vergleichen, das von der hinteren bildgebenden Vorrichtung (6) aufgenommen wird, nachdem der Arbeitsvorgang ausgeführt wurde, um das Geerntete und/oder die Erntequalität zu bestimmen.

6. Landwirtschaftliches Fahrzeug nach Anspruch 1, wobei das landwirtschaftliche Fahrzeug ein Traktor (1-p) ist, der mit einem Pflug (23) ausgestattet ist;
wobei das vorausliegende Feld (Fah), das von der vorderen bildgebenden Vorrichtung (5) gescannt wird, zur Führung des Traktors in dem Feld ausgewertet wird, um ein automatisches Pflügen durchzuführen; wobei die Punktwolke des zurückliegenden Felds (Fba), die von der hinteren LIDAR (6) aufgenommen wird, von der elektronischen Einheit (10) verarbeitet und ausgewertet wird, um die Position der Furchen (25) zu kartieren, die der Pflug (23) in dem Boden geschnitten hat.

7. Landwirtschaftliches Fahrzeug nach Anspruch 6, wobei die elektronische Einheit (10) dazu ausgebildet ist, die Tiefe und die Form der Furche (25), die der Pflug in den Boden geschnitten hat, durch analysieren der erhaltenen Punktwolke zu messen, und wobei der Traktor dazu ausgebildet ist, das Pflug-Arbeitsgerät entsprechend bezüglich einer benutzerdefinierten Soll-Größe zu steuern.

8. Landwirtschaftliches Fahrzeug nach Anspruch 1, wobei das landwirtschaftliche Fahrzeug ein Traktor ist, der mit einer Schneidvorrichtung (29) versehen ist, die dazu ausgebildet ist, Zweige von Bäumen in einem Weinberg oder einer Obstplantage zuschneiden;
wobei die elektronische Einheit (10) dazu ausgebildet ist, die Karte des vorausliegenden Felds (Fah), die von der vorderen bildgebenden Vorrichtung (5) gescannt wird, zur Führung des Fahrzeugs durch den Weinberg oder die Obstplantage zu verwenden.

9. Landwirtschaftliches Fahrzeug nach Anspruch 8, wobei die elektronische Einheit (10) dazu ausgebildet ist, die Form der zu schneidenden Bäume basierend auf der Punktwolke des vorausliegenden Felds (Fah) zu erfassen, und dazu ausgebildet ist, diese Punktwolke mit der des zurückliegenden Felds (Fbh) zu vergleichen, das von der hinteren bildgebenden Vorrichtung (6) gescannt wird, um das Volumen der geschnittenen Zweige und die Qualität der Schneid-Arbeitsvorgänge auszuwerten.

10. Landwirtschaftliches Fahrzeug nach einem der vorhergehenden Ansprüche,
wobei die vordere/hintere bildgebende Vorrichtung eine der nachfolgenden ist:
ein LIDAR Sensor;
eine 3D Stereo-Kamera,
ein 3D Radar, oder
ein 3D Ultraschallsensor.

## Revendications

1. Véhicule agricole (1) dont la carrosserie (3) est pourvue d'une cabine (4) pour l'opérateur :
le véhicule (1) est équipé d'un dispositif d'imagerie tridimensionnelle avant (5) (Fah) qui est la zone configurée pour scanner le champ à l'avant du véhicule (1) vers lequel il se dirige et d'un dispositif d'imagerie tridimensionnelle arrière (6) configuré pour scanner le champ à l'arrière (Fbh), c'est-à-dire une zone arrière sur laquelle il est passé ;
le véhicule (1) est équipé d'un système GPS (8) configuré pour fournir la position et les coordonnées des nuages de points scannés du champ à l'avant (Fah) et du champ à l'arrière (Fbh) ;
le véhicule est également équipé d'une unité électronique (10) configurée pour comparer les nuages de points du champ à l'avant (Fah) et du champ à l'arrière (Fbh), fournis par les dispositifs d'imagerie tridimensionnelle avant et arrière (5, 6) et le système GPS (8), afin que le véhicule agricole puisse être guidé en toute autonomie et/ou que les opérations agricoles effectuées par le véhicule agricole puissent être automatisées,
**caractérisé en ce que** ladite unité électronique (10) est conçue pour transmettre la position et les coordonnées des nuages de points scannés du champ à l'avant (Fah) et du champ à l'arrière (Fbh) à au moins un autre véhicule (20) opérant dans la même zone, afin de permettre d'effectuer par la suite des opérations automatiques.

2. Véhicule agricole selon la revendication 1, dans lequel ledit véhicule agricole est un tracteur (1-t) équipé d'un râteau à foin (15) conçu pour rassembler le foin ou le fourrage coupé en au moins un andain (17) pour être récolté par la suite ;
d'un dispositif d'imagerie arrière (6) configuré pour scanner le champ à l'arrière (Fbh) et pour collecter des nuages de points marqués GEO qui représentent un plan comprenant l'andain (17) ;
ladite unité électronique (10) est conçue pour détecter la forme et la position de l'andain (17) sur le plan afin d'estimer le volume de l'andain (17), en se basant au moins sur le nuage de points du champ à l'arrière (Fbh).

3. Système comprenant un premier véhicule agricole selon la revendication 2, dans lequel ladite unité électronique (10) est conçue pour transmettre le plan à un autre véhicule de pressage/récolte (20) suivant dans le champ ledit véhicule agricole (1) et conçu pour récolter l'andain (17) ;
ledit système comprend en outre un autre véhicule (20) conçu pour exploiter le plan précédemment mis à jour par ledit premier véhicule, ainsi que son dispositif d'imagerie avant (5) pour scanner le champ à l'avant (Fah), afin de récolter le foin ou le fourrage.

4. Véhicule agricole selon la revendication 1, dans lequel ledit véhicule agricole est une moissonneuse (1-h) conçue pour couper et récolter le foin ou le fourrage (22) ;
ladite unité électronique (10) est conçue pour détecter la position et la forme des cultures (22) sur la base du nuage de points du champ à l'avant (Fah) à récolter et pour guider le véhicule agricole en conséquence.

5. Véhicule agricole selon la revendication 4, dans lequel ladite unité électronique est conçue pour comparer le nuage de points du champ à l'avant (Fah) avec le nuage de points du champ à l'arrière (Fbh), acquis grâce au dispositif d'imagerie arrière (6) après l'exécution de l'opération afin d'estimer la récolte et/ou la qualité de la récolte.

6. Véhicule agricole selon la revendication 1, dans lequel ledit véhicule agricole est un tracteur (1-p) équipé d'une charrue (23) ;
le champ à l'avant (Fah) scanné par le dispositif d'imagerie avant (5) est exploité pour guider le tracteur dans le champ afin d'effectuer un labourage en toute autonomie ; le nuage de points du champ à l'arrière (Fbh), collecté par le LIDAR arrière (6), est traité par l'unité électronique (10) et est exploité pour cartographier la position des sillons (25) que la charrue (23) a creusés dans le sol.

7. Véhicule agricole selon la revendication 6, dans lequel l'unité électronique (10) est conçue pour mesurer la profondeur et la forme des sillons (25) que la charrue a creusés dans le sol, en analysant le nuage de points acquis, et le tracteur est conçu pour commander la charrue en conséquence par rapport à une cible définie par l'utilisateur.

8. Véhicule agricole selon la revendication 1, dans lequel ledit véhicule agricole est un tracteur équipé d'un élagueur (29) conçu pour couper les branches des arbres dans un vignoble ou un verger ;
l'unité électronique (10) est conçue pour utiliser le plan du champ à l'avant (Fah) scanné par le dispositif d'imagerie avant (5) afin de guider le véhicule dans le vignoble ou le verger.

9. Véhicule agricole selon la revendication 8, dans lequel ladite unité électronique (10) est conçue pour détecter la forme des arbres à élaguer sur la base du nuage de points du champ à l'avant (Fah) et est conçue pour comparer ce nuage de points avec celui du champ à l'arrière (Fbh), acquis grâce au dispositif d'imagerie arrière (6) afin d'évaluer le volume des branches élaguées ou d'évaluer la qualité des opérations d'élagage.

10. Véhicule agricole selon l'une quelconque des revendications précédentes, dans lequel le dispositif d'imagerie avant/arrière est l'un des éléments suivants :
un capteur LIDAR ;
une caméra stéréo 3D ;
un RADAR 3D ; ou
un capteur 3D à ultrasons.
